# EUROPEAN PATENT SPECIFICATION

(11) **EP 3 614 278 B1**
(45) Date of publication and mention of the grant of the patent: **07.01.2026**
(21) Application number: 17906051.2
(22) Date of filing: 20.04.2017
(51) Int. Cl.: G06F 17/18, G08G 3/02

(54) **EVALUATION PROGRAM, EVALUATION METHOD, AND EVALUATION DEVICE**
AUSWERTUNGSPROGRAMM, AUSWERTUNGSVERFAHREN UND AUSWERTUNGSVORRICHTUNG
PROGRAMME, PROCÉDÉ ET DISPOSITIF D'ÉVALUATION

(43) Date of publication of application: 26.02.2020
(73) Proprietor: Fujitsu Limited, Kawasaki-shi, Kanagawa 211-8588 (JP)
(72) Inventor: SAITO, Takahiro, Kawasaki-shi Kanagawa 211-8588 (JP)
(74) Representative: Hoffmann Eitle
(86) International application number: PCT/JP2017/015947
(87) International publication number: WO 2018/193595

(56) References cited:
- JP-A- 2010 044 048
- JP-A- 2010 092 312
- JP-A- 2012 079 297
- GERRIT JAN KOOTSTRA: "Exploratory Factor Analysis Exploratory Factor Analysis Theory and Application", PROJECT ON EXPLORATORY FACTOR ANALYSIS, 2004, pages 1 - 15, XP055715518, Retrieved from the Internet <URL:https://www.let.rug.nl/nerbonne/teach/rema-stats-meth-seminar/Factor-Analysis-Kootstra-04.PDF> [retrieved on 20200716]
- HAVOLD J I ET AL: "From safety culture to safety orientation: Validation and simplification of a safety orientation scale using a sample of seafarers working for Norwegian ship owners", SAFETY SCIENCE, ELSEVIER, AMSTERDAM, NL, vol. 47, no. 3, March 2009 (2009-03-01), pages 305 - 326, XP025876198, ISSN: 0925-7535, [retrieved on 20080626], DOI: 10.1016/J.SSCI.2008.05.002
- JAMES C. HAYTON ET AL: "Factor Retention Decisions in Exploratory Factor Analysis: a Tutorial on Parallel Analysis", ORGANIZATIONAL RESEARCH METHODS, vol. 7, no. 2, April 2004 (2004-04-01), pages 191 - 205, XP055715436, ISSN: 1094-4281, DOI: 10.1177/1094428104263675
- KRIJNEN WIM P: "Some Results on Mean Square Error for Factor Score Prediction", PSYCHOMETRIKA, PSYCHOMETRIC SOCIETY, WILLIAMSBURG, VA, US, vol. 71, no. 2, 11 February 2017 (2017-02-11), pages 395 - 409, XP036158571, ISSN: 0033-3123, [retrieved on 20170211], DOI: 10.1007/S11336-004-1220-7

## Description

### TECHNICAL FIELD

The present invention relates to an evaluation program, an evaluation method and an evaluation device.

### BACKGROUND ART

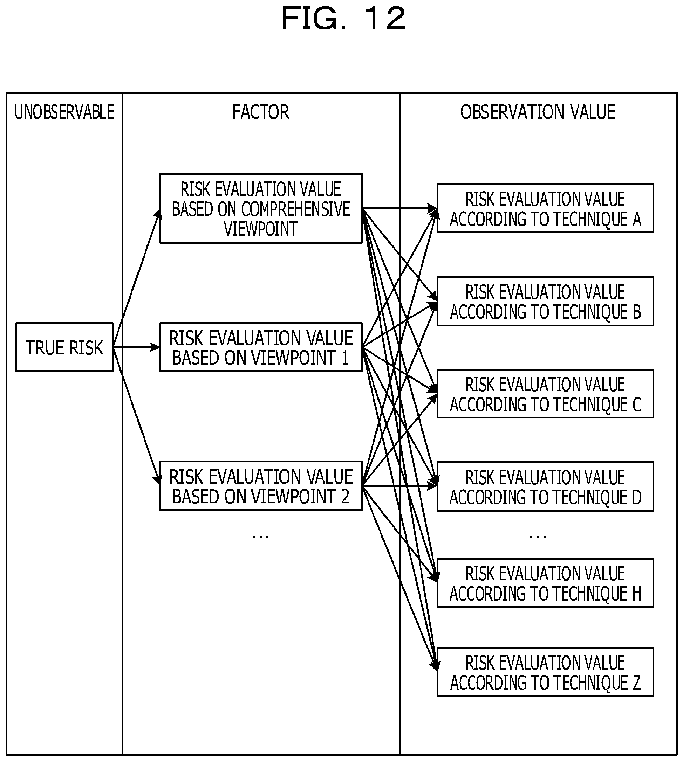

Conventionally, a risk evaluation technique has been proposed in which a risk evaluation value based on a "comprehensive viewpoint" is calculated with unsupervised learning by combining risk evaluation results based on a plurality of risk evaluation techniques based on various viewpoints. A factor analysis is an example of such a risk evaluation technique. FIG. 12 is a diagram for describing a factor analysis.

For example, in a factor analysis, when factors of an unobservable "true risk" include a "risk based on comprehensive viewpoint", a "risk based on viewpoint 1", a "risk based on viewpoint 2", ... , and observation values include a "risk evaluation value according to technique A", a "risk evaluation value according to technique B", a "risk evaluation value according to technique C", ... that are observable, each of the observation values (a risk evaluation value according to each technique) is represented as a linear combination of the factors. A coefficient by which corresponding one of factors is multiplied when each of the observation values (a risk evaluation value based on each technique) is represented as a linear combination of the factors is referred to as a "factor loading". A technique of performing a factor analysis by calculating "factor loadings" appropriately is proposed.

### CITATION LIST

### PATENT DOCUMENT

Patent Document 1: Japanese National Publication of International Patent Application No. 2011-517765
Patent Document 2: Japanese Laid-open Patent Publication No. 2001-188796 Gerrit Jan Kootstra: "Exploratory Factor Analysis Exploratory Factor Analysis Theory and Application",Project on exploratory Factor Analysis, 2004, pages 1-15, XP055715518 describes exploratory factor analysis using different techniques of factor retention, and also describes factor rotation.HAVOLD J I ET AL: "From safety culture to safety orientation: Validation and simplification of a safety orientation scale using a sample of seafarers working for Norwegian ship owners",SAFETY SCIENCE, ELSEVIER, AMSTERDAM, NL, vol. 47, no. 3, March 2009 (2009-03), pages 305-326, XP025876198 describes risk estimation in a vessel navigation context using factor analysis with factor retention and factor rotation.JAMES C. HAYTON ET AL: "Factor Retention Decisions in Exploratory Factor Analysis: a Tutorial on Parallel Analysis",ORGANIZATIONAL RESEARCH METHODS, vol. 7, no. 2, April 2004 (2004-04), pages 191-205, XP055715436 describes an overview of factor retention methods with emphasis on parallel Analysis.

### SUMMARY OF INVENTION

### TECHNICAL PROBLEM

However, the above-described conventional technique uses unsupervised learning. Thus, it is difficult to eliminate a "risk evaluation value" that is inappropriate and should not be incorporated in calculation of the "risk value based on comprehensive viewpoint" that appropriately explains a case from all viewpoints. An inappropriate "risk evaluation value" that is inappropriate and should not be incorporated in calculation of the "risk value based on comprehensive viewpoint" may be, for example, a "risk evaluation value" calculated according to a technique that strongly depends on a specific viewpoint or situation. Therefore, as a result, a calculated "risk value based on comprehensive viewpoint" becomes inappropriate, which is disadvantageous.

In one aspect, an object of the present invention is to provide an evaluation program, an evaluation method, and an evaluation device that improves the validity of a risk value based on a comprehensive viewpoint.

### SOLUTION TO PROBLEM

The present invention relates to an evaluation program as claimed in claim 1, a corresponding evaluation method as claimed in claim 3 and a corresponding evaluation device as claimed in claim 4. A preferred embodiments is defined in the dependent claim.

According to a first aspect, an evaluation program causes a computer to calculate a first factor loading of each of a plurality of risk evaluation values by performing factor analysis on the plurality of risk evaluation values each calculated according to one of a plurality of techniques. The evaluation program then causes the computer to exclude, from the plurality of risk evaluation values, a risk evaluation value for which the calculated first factor loading is less than a predetermined value. Then, the evaluation program causes the computer to perform the factor analysis on the plurality of risk evaluation values obtained by excluding the risk evaluation value for which the first factor loading is equal to or less than the predetermined value. Then, the evaluation program causes the computer to repeat the processing described above until no risk evaluation value for which the first factor loading is equal to or less than the predetermined value appears by the factor analysis.

### ADVANTAGEOUS EFFECTS OF INVENTION

One embodiment of the present invention has an effect of improving the validity of a risk value based on a comprehensive viewpoint.

### BRIEF DESCRIPTION OF DRAWINGS

FIG. 1 is a diagram illustrating an example of a schematic configuration of a support system according to an embodiment.
FIG. 2 is a diagram illustrating an example of a schematic configuration of an evaluation device according to the embodiment.
FIG. 3 is a diagram illustrating an example of risk evaluation value calculation result information according to the embodiment.
FIG. 4 is a diagram illustrating an example of the result of calculating a first factor loading by performing the factor analysis for the first time in a case in the embodiment.
FIG. 5 is a diagram illustrating an example of the result of calculating the first factor loading by performing the factor analysis for the second time in the case in the embodiment.
FIG. 6 is a diagram illustrating an example of the final result of calculating the first factor loading in the case in the embodiment.
FIG. 7 is a diagram illustrating an example of the result of calculating a "weight" for each of the first factor loadings in the case in the embodiment.
FIG. 8 is a diagram illustrating an example of the result of calculating the comprehensive risk value in the case in the embodiment.
FIG. 9 is a diagram illustrating an exemplary flowchart of comprehensive risk value calculation processing according to the embodiment.
FIG. 10 is a diagram illustrating an evaluation result of the comprehensive risk evaluation value calculation technique according to the embodiment.
FIG. 11 is a diagram illustrating a computer that executes an evaluation program.
FIG. 12 is a diagram for describing a factor analysis.

### DESCRIPTION OF EMBODIMENTS

Hereinafter, embodiments of an evaluation program, an evaluation method, and an evaluation device according to the disclosed technique will be described in detail based on the drawings. Note that the following embodiments do not limit the present invention. The embodiments can be appropriately combined as far as there is no contradiction in processing. In the following embodiment, a case where the disclosed technique is applied to a support system that supports navigation of a vessel will be described as an example. However, the application of the present disclosure is not limited to this, and the present disclosure can be applied to cases where the feature that appears on a risk corresponding to the first factor loading is most apparent and can be analyzed by factor analysis, and the like. In the following embodiments, "risk", "risk value", "risk evaluation value", and "comprehensive risk evaluation value" indicate, for example, the degree of probability that vessels navigating in a sea area, in which navigation should be controlled, collide with each other when a predetermined time elapses in a case where the vessels keep the routes and the speeds at the time. Depending on the risk calculation technique, those terms may indicate a subjective collision probability of a captain or a pilot instead of an objective evaluation value as described above. The "time" includes date information and time information.

As a premise of the following embodiment, it is assumed that the risk evaluation values used in factor analysis are nine types of techniques A to H and a technique Z, and the risk evaluation value of each technique is normalized to take a value from 0 (risk = 0) to 1 (risk is the maximum). By the technique Z, an appropriate risk evaluation value is calculated only when a very high risk such as a case of a marine accident occurs, but an appropriate evaluation value is not calculated in a case that does not lead to a vessel collision. The risk evaluation techniques are not limited to nine types of the techniques A to H and the technique Z.

In the following embodiment, it is further assumed, as illustrated in FIG. 12, that the risk evaluation value calculated according to each risk evaluation technique includes a "risk value based on comprehensive viewpoint" (hereinafter also referred to as "comprehensive risk evaluation value") and a "risk value based on one or more viewpoints n (n = 1, 2, ...)" at certain ratios. In the following embodiment, it is also assumed that the "true risk" most strongly affects the "risk value based on comprehensive viewpoint".

For example, as evaluation techniques of collision risk in marine traffic, there are risk evaluation techniques based on various viewpoints as follows. This is due to the fact that it is very difficult to construct an evaluation technique that takes all the factors into consideration since the collision risk of a vessel is affected in various ways from a wide variety of factors. For example, as risk evaluation techniques focusing on objective facts, there is a technique focusing on the distance at the closest approach and the time taken to the closest approach, a technique focusing on the collision probability, and a technique focusing on the size of room for avoidance action. In addition, for example, as risk evaluation techniques focusing on subjective feeling, there is a technique focusing on the magnitude of risk that a captain or a pilot feels, and a technique focusing on the size of room for avoidance action that a captain or a pilot feels. The technique disclosed herein is based on the background that each of these risk evaluation techniques is based only on a corresponding viewpoint, and it is desired to calculate a "risk evaluation value based on comprehensive viewpoint" that appropriately describes a case from all viewpoints, in other words, that indicates the maximum risk factor across the plurality of techniques.

### [Embodiment]

### (Configuration of Support System)

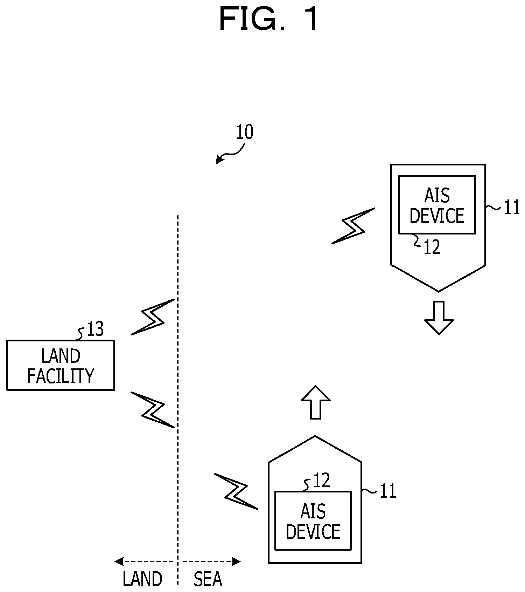

First, an example of a support system 10 according to an embodiment will be described. FIG. 1 is a diagram illustrating an example of a schematic configuration of a support system according to an embodiment. The support system 10 is a marine traffic control system that supports the navigation of vessels.

FIG. 1 illustrates two vessels 11 and a land facility 13. Each vessel 11 is equipped with an Automatic Identification System (AIS) device 12. For example, specific vessels are required to be equipped with the AIS device 12 by a law or the like. The specific vessels are all vessels of 300 gross tons or more engaged on international voyages, all passenger vessels engaged on international voyages, and all vessels of 500 gross tons or more that are not engaged on international voyages. In addition, vessels other than the specific vessels may also be equipped with the AIS device 12.

The AIS device 12 periodically transmits AIS information including various types of information related to the vessel 11 equipped with the AIS device 12 via wireless communication. The AIS information includes, for example, information such as a position defined by latitude and longitude, a speed, a vessel name, a time, a bow direction, Maritime Mobile Service Identity (MMSI), a captain, and a vessel width. The AIS information is received by the other vessel 11 and the land facility 13. The other vessel 11 and the land facility 13 can grasp various types of information such as a position, a speed, a vessel name, a time, a bow direction, MMSI, a captain, a vessel width, and the like of the vessel 11 that is a transmission source of the received AIS information.

The land facility 13 is, for example, a facility that controls navigation of each of the vessels 11 such as a marine traffic center or a port traffic control room that have a role of monitoring and providing information about vessels on the sea. The land facility 13 grasps the position of each vessel 11 based on the AIS information received from the vessel 11, information detected by a radar, etc., and provides various types of information related to marine traffic to the vessel 11.

### (Configuration of Evaluation Device)

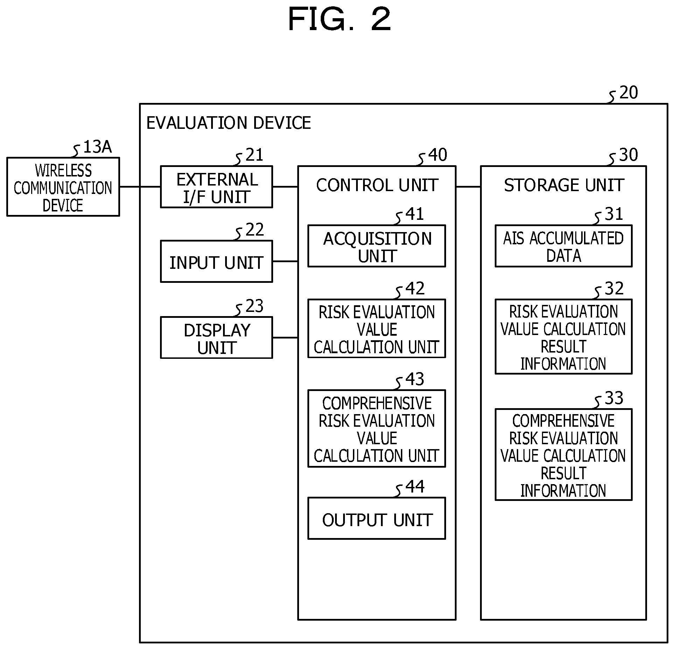

Next, the configuration of an evaluation device 20 according to the embodiment will be described. FIG. 2 is a diagram illustrating an example of a schematic configuration of an evaluation device according to the embodiment. The evaluation device 20 is disposed in the land facility 13 and is a device that supports the navigation of vessels. For example, the evaluation device 20 is implemented in a computer device such as a server disposed in the land facility 13.

The evaluation device 20 includes an external interface (I/F) unit 21, an input unit 22, a display unit 23, a storage unit 30, and a control unit 40.

The external I/F unit 21 is, for example, an interface that transmits and receives various types of information to and from other devices. The external I/F unit 21 can wirelessly communicate with each vessel 11 via a wireless communication device 13A such as an antenna provided in the land facility 13, and the external I/F unit 21 transmits and receives various types of information to and from each vessel 11. For example, the external I/F unit 21 receives the AIS information from each vessel 11 via the wireless communication device 13A.

The input unit 22 is an input device for inputting various types of information. Examples of the input unit 22 include an input device that receives an input of an operation such as a mouse, or a keyboard. The input unit 22 receives input of various types of information. For example, the input unit 22 receives an operation input instructing start of various types of processing. The input unit 22 inputs operation information indicating the received operation content to the control unit 40.

The display unit 23 is a display device that displays various types of information. Examples of the display unit 23 include display devices such as a Liquid Crystal Display (LCD) and a Cathode Ray Tube (CRT). The display unit 23 displays various types of information. For example, the display unit 23 displays various screens such as an operation screen.

The storage unit 30 is an external memory device such as a hard disk drive (HDD), a solid state drive (SSD), or an optical or magneto-optical disk. The storage unit 30 may be a semiconductor memory in which data is rewritable such as a random access memory (RAM), a flash memory, and a non volatile static random access memory (NVSRAM).

The storage unit 30 stores an operating system (OS) and various programs executed by the control unit 40. For example, the storage unit 30 stores a program for performing evaluation processing described below. Furthermore, the storage unit 30 stores various types of data used by a program executed by the control unit 40. For example, the storage unit 30 stores AIS accumulated data 31, risk evaluation value calculation result information 32, and comprehensive risk evaluation value calculation result information 33. Each of the AIS accumulated data 31, the risk evaluation value calculation result information 32, and the comprehensive risk evaluation value calculation result information 33 is of a data format of a table as an example. However, the data format is not limited thereto, and each of the AIS accumulated data 31, the risk evaluation value calculation result information 32, and the comprehensive risk evaluation value calculation result information 33 may be of other data formats such as Comma Separated Values (CSV) format.

The AIS accumulated data 31 is data in which AIS information received from each vessel 11 is accumulated. The risk evaluation value calculation result information 32 is data having the risk calculation result of each technique for "vessel 1" with respect to "vessel 2" at each time as one record, and is data to be input to the comprehensive risk value calculation processing described below.

### (Risk Evaluation Value Calculation Result Information)

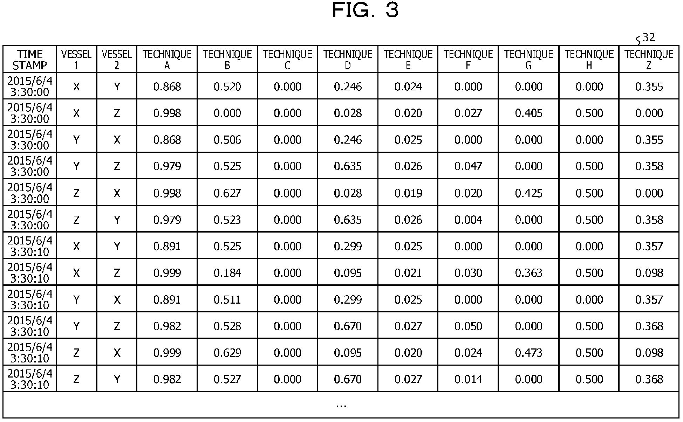

FIG. 3 is a diagram illustrating an example of risk evaluation value calculation result information according to the embodiment. As illustrated in FIG. 3, the risk evaluation value calculation result information 32 includes items such as "time stamp", "vessel 1", "vessel 2", "technique A" to "technique H", "technique Z", etc. Each of the items of the risk evaluation value calculation result information 32 illustrated in FIG. 3 is an example, and the risk evaluation value calculation result information 32 may have other items. Note that, in the example of FIG. 3, the vessels that can be set to "vessel 1" and "vessel 2" are three vessels "X", "Y", and "Z" as an example. "X", "Y", and "Z" are identified based on, for example, the MMSI of a vessel.

The "time stamp" indicates date and time corresponding to each record of the risk evaluation value calculation result information 32 identified by "vessel 1", "vessel 2", "technique A" to "technique H", and "technique Z". For example, in the first record illustrated in FIG. 3, each risk value of "vessel 1" "X" with respect to "vessel 2" "Y" at "time stamp" "2015/6/4 3:30:00" indicates that the risk value according to "technique A" is "0.868". The same applies to the risk values according to "technique B" to "technique H" and "technique Z".

### (Comprehensive Risk Evaluation Value Calculation Result Information)

The comprehensive risk evaluation value calculation result information 33 will be described below.

The control unit 40 is a device that controls the evaluation device 20. As the control unit 40, a processing device such as a central processing unit (CPU) or a micro processing unit (MPU), or an integrated circuit such as an application specific integrated circuit (ASIC) or a field programmable gate array (FPGA) can be used. The control unit 40 includes an internal memory for storing programs defining various types of processing procedures and control data, and performs various types of processing using the programs and the control data. The control unit 40 functions as various types of processing units by executing various programs. For example, the control unit 40 includes an acquisition unit 41, a risk evaluation value calculation unit 42, a comprehensive risk evaluation value calculation unit 43, and an output unit 44.

The acquisition unit 41 acquires various types of information. For example, the acquisition unit 41 acquires travel information about the position and speed of each vessel. For example, the acquisition unit 41 acquires AIS information from each vessel 11 via the wireless communication device 13A as the travel information about each vessel. The acquisition unit 41 stores the acquired AIS information in the AIS accumulated data 31. In addition, as the speed of each vessel, the speed stored in the AIS information may be used, or the speed of each vessel may be calculated from the change of the position of the vessel at each time. In the present embodiment, a case where the evaluation device 20 receives AIS information will be described, but the AIS information may be stored in an external memory device such as a storage device. In this case, the acquisition unit 41 acquires the AIS information of each vessel 11 from the external memory device.

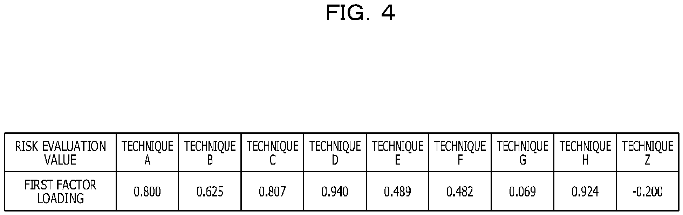

The risk evaluation value calculation unit 42 first calculates a correlation matrix of the risk evaluation value calculation result information 32 that is input data, and determines the number of eigenvalues having a value of 1 or more based on Guttman criterion as the number of factors used in performing factor analysis. Although the factor analysis performed in the present embodiment is a factor analysis including promax rotation, the factor analysis is not limited to this, and any factor analysis including oblique rotation on the premise that there is a correlation between factors may be used. Then, based on the AIS accumulated data 31, the risk evaluation value calculation unit 42 calculates a factor loading that has the maximum value (hereinafter referred to as a first factor loading) in each of the risk evaluation value calculation techniques, "technique A" to "technique H" and "technique Z" using each of the risk evaluation value calculation techniques. FIG. 4 is a diagram illustrating an example of the result of calculating the first factor loading by performing the factor analysis for the first time in the case in the embodiment.

Next, the risk evaluation value calculation unit 42 deletes the risk evaluation value according to a technique having a negative value as the first factor loading as a result of the first factor analysis from the risk evaluation value calculation result information 32 that is the input data. In the example illustrated in FIG. 4, the first factor loading of "technique Z" has a negative value. Thus, "technique Z" is deleted from the risk evaluation value calculation result information 32. In addition, when a risk evaluation value is deleted from the risk evaluation value calculation result information 32 which is input data, the value to be deleted is not limited to the first factor loading having a negative value, but a first factor loading having a value equal to or less than a predetermined value (or less than a predetermined value) may be deleted.

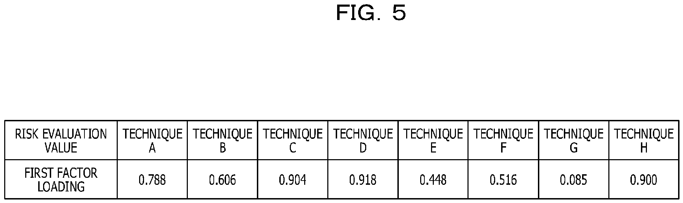

Next, the risk evaluation value calculation unit 42 calculates a correlation matrix of the risk evaluation value calculation result information 32 obtained by deleting the risk evaluation value having a negative value as the first factor loading from the risk evaluation value calculation result information 32 that is the input data, and determines the number of eigenvalues having a value of 1 or more based on Guttman criterion as the number of factors used in performing factor analysis. Then, based on the AIS accumulated data 31, the risk evaluation value calculation unit 42 calculates the first factor loading for each of the risk evaluation value calculation techniques, "technique A" to "technique H" using the technique. FIG. 5 is a diagram illustrating an example of the result of calculating the first factor loading by performing the factor analysis for the second time in the case in the embodiment.

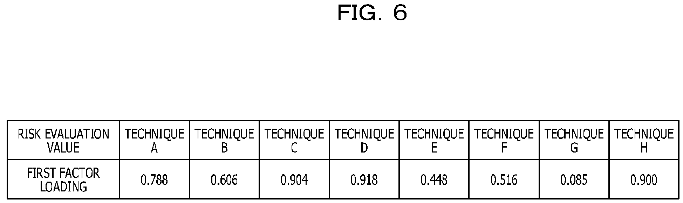

Note that, the risk evaluation value calculation unit 42 repeats the processing of performing the factor analysis and deleting the risk evaluation value of a technique having a negative value as the first factor loading from the risk evaluation value calculation result information 32 that is the input data until a technique having a negative value as the first factor loading as a result of the factor analysis does not appear. FIG. 6 is a diagram illustrating an example of the final result of calculating the first factor loading in the case in the embodiment. FIG. 6 illustrates an example, in which the first factor loading is "0.788" according to "technique A", "0.606" according to "technique B", "0.904" according to "technique C", "0.918" according to "technique D", "0.448" according to "technique E", "0.516" according to "technique F", "0.085" according to "technique G", and "0.900" according to "technique H".

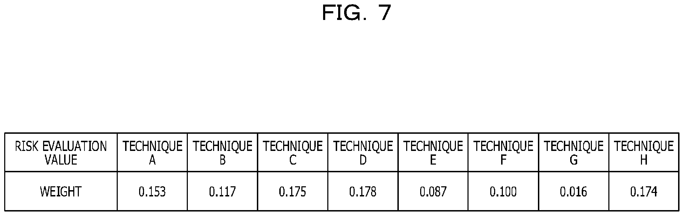

Then, the risk evaluation value calculation unit 42 calculates a "weight" for each of the "first factor loadings" with respect to the total of the "first factor loadings" illustrated in FIG. 6, 0.788 + 0.606 + 0.904 + 0.918 + 0.448 + 0.516 + 0.085 + 0.900 = 5.165. FIG. 7 is a diagram illustrating an example of the result of calculating the "weight" for each of the first factor loadings in the case in the embodiment. FIG. 7 illustrates an example, in which the "weight" is "0.153" for "technique A", "0.117" for "technique B", "0.175" for "technique C", "0.178" for "technique D", "0.087" for "technique E", "0.100" for "technique F", "0.016" for "technique G", and "0.174" for "technique H".

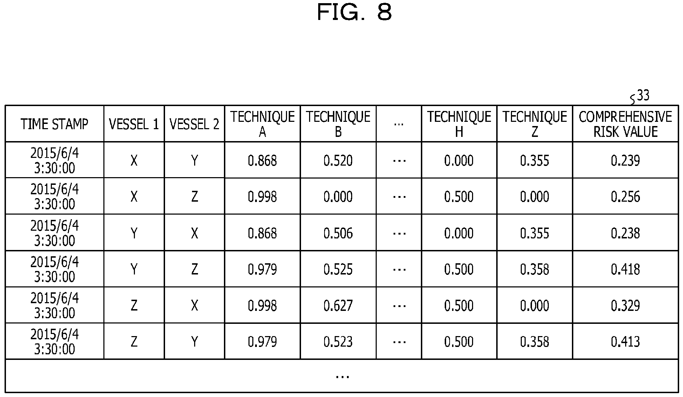

The comprehensive risk calculation unit 43 multiplies the risk evaluation value according to each of the techniques in the risk evaluation value calculation result information 32 obtained by deleting a technique having a negative value as the first factor loading from the risk evaluation value calculation result information 32 by corresponding one of the "weights" calculated by the risk evaluation value calculation unit 42, and totals the weighted risk evaluation values to calculate the "comprehensive risk evaluation value". FIG. 8 is a diagram illustrating an example of the result of calculating the comprehensive risk value in the case in the embodiment. For example, in the first record of the risk evaluation value calculation result information 32 illustrated in FIG. 8, the risk values of "vessel 1" "X" with respect to "vessel 2" "Y" are "0.868" according to "technique A", "0.520" according to "technique B", ... , and "0.000" according to "technique H", and the "comprehensive risk evaluation value" is 0.868 × 0.153 + 0.520 × 0.117 + ... + 0.000 × 0.174 = 0.239. The comprehensive risk calculation unit 43 similarly calculates the "comprehensive risk evaluation value" for the second and subsequent records of the risk evaluation value calculation result information 33 illustrated in FIG. 8.

The output unit 44 performs various outputs. For example, the output unit 44 outputs the "comprehensive risk evaluation value" calculated by the comprehensive risk evaluation value calculation unit 43. Alternatively, when the "comprehensive risk evaluation value" calculated by the comprehensive risk evaluation value calculation unit 43 is equal to or higher than a threshold, the output unit 44 may output a warning.

The risk evaluation value calculation unit 42 is an example of a calculation unit that performs factor analysis on the plurality of risk evaluation values each calculated according to one of the plurality of techniques to calculate the first factor loading of each risk evaluation value. In addition, the risk evaluation value calculation unit 42 is an example of an exclusion unit that excludes, from the plurality of risk evaluation values, a risk evaluation value for which the calculated first factor loading is less than a predetermined value. Further, the risk evaluation value calculation unit 42 is an example of a factor analysis unit that performs factor analysis on the plurality of risk evaluation values obtained by excluding a risk evaluation value for which the first factor loading is equal to or less than the predetermined value.

### (Comprehensive Risk Value Calculation Processing)

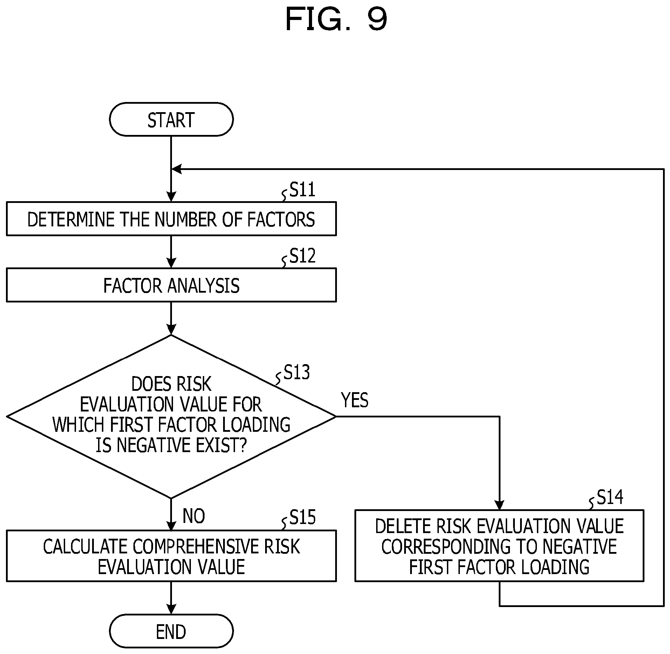

FIG. 9 is a diagram illustrating an exemplary flowchart of comprehensive risk value calculation processing according to the embodiment. The comprehensive risk value calculation processing is performed by the comprehensive risk evaluation value calculation unit 43 at a timing when the comprehensive risk evaluation value calculation unit 43 receives a predetermined operation instructing the start of processing such as a timing of performing analysis of a past case using the accumulated AIS data 31 or at a predetermined period. It is assumed that each risk evaluation value is calculated in advance by the risk evaluation value calculation unit 42 using technique A to technique H and technique Z before the "comprehensive risk evaluation value" is calculated by the comprehensive risk evaluation value calculation unit 43.

First, in step S11, the comprehensive risk evaluation value calculation unit 43 calculates a correlation matrix of the risk evaluation value calculation result information 32, which is input data, and determines the number of eigenvalues having a value of 1 or more based on Guttman criterion as the number of factors used in performing factor analysis. Next, in step S12, the comprehensive risk evaluation value calculation unit 43 performs factor analysis to calculate a first factor loading that has the maximum value for each of the risk evaluation value calculation techniques "technique A" to "technique H" and "technique Z" using the technique based on the AIS accumulated data 31.

Next, in step S13, the comprehensive risk evaluation value calculation unit 43 determines whether a risk evaluation value for which a first factor loading is negative exists. The comprehensive risk evaluation value calculation unit 43 proceeds the processing to step S14 if a risk evaluation value for which the first factor loading is negative exists (Yes in step S13). On the other hand, the comprehensive risk evaluation value calculation unit 43 proceeds the processing to step S15 if a risk evaluation value for which the first factor loading is negative exists (No in step S13).

In step S14, the comprehensive risk evaluation value calculation unit 43 deletes a risk evaluation value corresponding to the negative first factor loading in step S13. When step S14 ends, the comprehensive risk evaluation value calculation unit 43 returns the processing to step S11.

On the other hand, in step S15, the comprehensive risk evaluation value calculation unit 43 calculates the "weight" for each "first factor loading" with respect to the total of the "first factor loadings", and multiplies the risk evaluation value according to each of the techniques in the risk evaluation value calculation result information 32 obtained by deleting a technique having a negative value as the first factor loading from the risk evaluation value calculation result information 32 by corresponding one of the calculated "weights" and totals the weighted risk evaluation values to calculate the "comprehensive risk evaluation value". When step S15 ends, the comprehensive risk evaluation value calculation unit 43 ends the comprehensive risk value calculation processing.

According to the above-described embodiment, an inappropriate risk evaluation value may be automatically eliminated, and the validity of the comprehensive risk evaluation value is improved.

### (Evaluation Result)

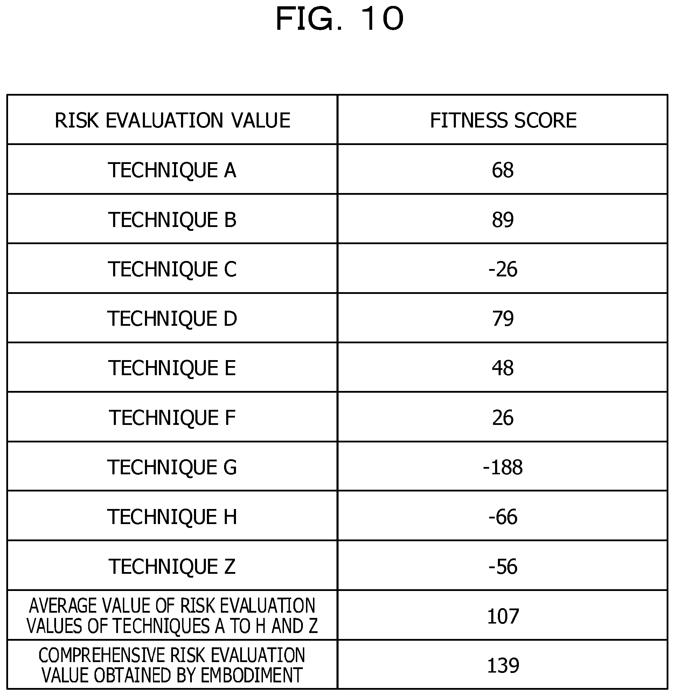

FIG. 10 is a diagram illustrating an evaluation result of the comprehensive risk evaluation value calculation technique according to the embodiment. In order to verify the embodiment, detailed analysis was performed on a near-miss case, and check items each of which should be satisfied by a risk evaluation value at each time in the near-miss case were set as follows.
(Check Item 1) At time T0, the risks of the vessel X with respect to all other vessels are zero.
(Check Item 2) From time T1 to time T2, the risk of the vessel X with respect to the vessel Y increases.
(Check Item 3) At time T2, the risk of the vessel X with respect to the vessel Y is smaller than the risk of the vessel X with respect to the vessel Z.

Evaluation is performed to determine whether the following risk values satisfy the above check items.
(Risk Value 1) A risk evaluation value according to each of technique A to technique H and technique Z.
(Risk Value 2) An average value of risk evaluation values according to techniques A to H and technique Z.
(Risk value 3) A "comprehensive risk evaluation value" calculated according to the embodiment (the risk evaluation value according to technique Z is excluded).

The risk values were evaluated into three grades of "each condition of check items 1 to 3 is satisfied, and the value of each risk evaluation value is subjectively valid" having a fitness score (2 points), "each condition of check items 1 to 3 is satisfied, but the value of each risk evaluation value is different from subjective evaluation" having a fitness score (0 point), and "any condition of check items 1 to 3 is not satisfied" having a fitness score (-2 points). While the "fitness value of risk evaluation value according to each of technique A to technique H and technique Z" was as illustrated in FIG. 10 and "average value of the risk evaluation values of technique A to technique H and technique Z" was "107 points", the "'comprehensive risk evaluation value' obtained by embodiment" was "139 points". That is, from the result, it can be seen that the "average value of risk evaluation values according to technique A to technique H and technique Z" has a score higher than the fitness score according to each of technique A to technique H and technique Z, but "'comprehensive risk evaluation value' obtained by embodiment" has a score even higher, and thus the embodiment is the most advantageous.

### (Other Embodiments)

Although an embodiment of the disclosed technique has been described above, the disclosed technique may be implemented in various forms different from each other in addition to the above-described embodiment. Thus, hereinafter, other embodiments included in the disclosed technique will be described.

### · Real-time calculation of "comprehensive risk evaluation value"

In the above-described embodiment, the evaluation device 20 analyzes the past case using the accumulated AIS data 31 by performing the "comprehensive risk evaluation value". However, the disclosed technique is not limited to this, and "weights" may be calculated in pre-training using the accumulated AIS data 31. Then, the evaluation device 20 may apply the "weights" calculated in the pre-training to the real-time AIS data 31 to calculate the "comprehensive risk evaluation value" in real time.

In addition, each component of each device illustrated in the drawings is functionally conceptual, and thus the device needs not be physically configured as illustrated in the drawings. That is, the specific aspects of separation and integration of each device are not limited to the illustrated aspects, and all or part of the device can be functionally or physically separated and integrated in any unit, in accordance with various loads, use situation, or the like. For example, the risk evaluation value calculation unit 42 and the comprehensive risk evaluation value calculation unit 43 may be integrated. Alternatively, for example, the comprehensive risk evaluation value calculation unit 43 may be separated to a factor number determination unit, a deletion unit that deletes a technique corresponding to a negative risk evaluation value, a "weight" calculation unit, and a comprehensive risk evaluation value calculation unit.

Further, all or any part of each processing function performed by corresponding processing unit may be realized by a CPU and a program analyzed and executed by the CPU, or may be realized as hardware using wired logic.

### (Evaluation Program)

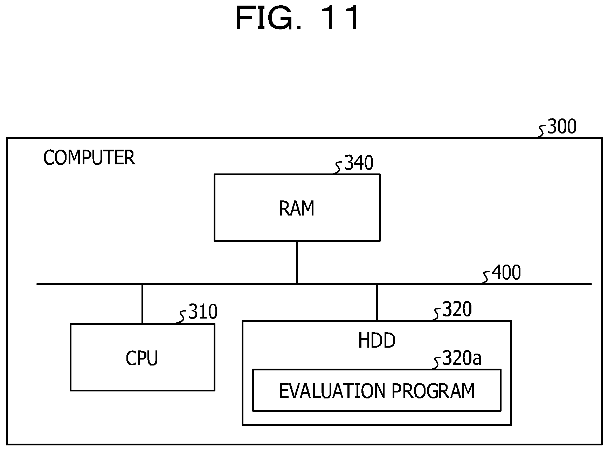

In addition, various types of processing described in the above embodiments can also be realized by executing a program prepared in advance on a computer system such as a personal computer or a workstation. Therefore, in the following description, an example of the computer system that executes a program having functions similar to those in the above-described embodiments will be described. FIG. 11 is a diagram illustrating a computer that executes an evaluation program.

As illustrated in FIG. 11, the computer 300 includes a CPU 310, a hard disk drive (HDD) 320, and a random access memory (RAM) 340. The components 310 to 340 are connected to each other via a bus 400.

The HDD 320 stores in advance a collision risk calculation program 320a that exhibits a function similar to the function of each of the processing units of the above-described embodiments. For example, the evaluation program 320a that exhibits functions similar to those of the acquisition unit 41, the risk evaluation value calculation unit 42, the comprehensive risk evaluation value calculation unit 43, and the output unit 44 in the above-described embodiments is stored. The evaluation program 320a may be divided into modules for the functions as appropriate.

The HDD 320 also stores various types of data. For example, the HDD 320 stores an OS and various types of data.

Then, the CPU 310 reads the evaluation program 320a from the HDD 320 and executes the evaluation program 320a, thereby performing operations similar to those of the processing units of the embodiments. That is, the evaluation program 320a performs operations similar to those of the acquisition unit 41, the risk evaluation value calculation unit 42, the comprehensive risk evaluation value calculation unit 43, and the output unit 44.

The evaluation program 320a described above does not necessarily have to be stored in the HDD 320 initially. For example, the program is stored in a "portable physical medium" such as a flexible disk (FD), a compact disk read only memory (CD-ROM), a digital versatile disk (DVD), a magneto-optical disk, or an IC card inserted into the computer 300. Then, the computer 300 may reads the program from these media and execute the program.

Furthermore, the program may be stored in "another computer (or a server)" or the like connected to the computer 300 via a public line, the Internet, a LAN, a WAN, or the like. Then, the computer 300 may reads the program from these media and execute the program.

### REFERENCE SIGNS LIST

- 10: support system

- 11: vessel
- 12: AIS device
- 13: land facility
- 13A: wireless communication device
- 20: evaluation device
- 21: external I/F unit
- 22: input unit
- 23: display unit
- 30: storage unit
- 31: AIS accumulated data
- 32: risk evaluation value calculation result information
- 33: comprehensive risk evaluation value calculation result information
- 40: control unit
- 41: acquisition unit
- 42: risk evaluation value calculation unit
- 43: comprehensive risk evaluation value calculation unit
- 44: output unit

## Claims

1. An evaluation program that causes a computer to perform processing comprising:
calculating, from calculation result information (32) including a plurality of risk evaluation values of each technique (A - Z) for a first vessel (11) with respect to a second vessel (11) at each time stamp as one record, a correlation matrix of the risk evaluation values;
determining (S11) a number of eigenvalues having a value of 1 or more based on a Guttman criterion as a number of factors used in performing factor analysis;
calculating (S12) a first factor loading of each of the plurality of risk evaluation values by performing the factor analysis on the correlation matrix using the number of factors;
determining (S13) whether a risk evaluation value for which the first factor loading is less than zero exists;
excluding (S14), from the plurality of risk evaluation values, the risk evaluation value for which the calculated first factor loading is less than zero when determining that the risk evaluation value for which the first factor loading is less than zero exists; and
performing the determining (S11) and the calculating (S12) again, when the risk evaluation value for which the calculated first factor loading is less than zero is excluded, on remaining risk evaluation values obtained by excluding the risk evaluation value for which the first factor loading is less than zero from the plurality of risk evaluation values; and
calculating (S15), when determining that the risk evaluation value for which the first factor loading is less than zero does not exist anymore, a weight for each of first factor loadings of the remaining risk evaluation values with respect to a total of the first factor loadings of the remaining risk evaluation values, multiplying each of the remaining risk evaluation values by the corresponding weight and totaling the weighted remaining risk evaluation values to calculate a comprehensive risk evaluation value,
wherein the comprehensive risk evaluation value indicates a degree of probability that the first vessel and the second vessel collide with each other when a predetermined time elapses in a case where the first vessel and the second vessel keep respective routes and respective speeds in a navigation area, and a warning is output when the comprehensive risk evaluation value is equal to or higher than a threshold.

2. The evaluation program according to any one of claims 1, wherein the factor analysis is factor analysis including oblique rotation.

3. An evaluation method performed by a computer, comprising:
calculating, from calculation result information (32) including a plurality of risk evaluation values of each technique (A - Z) for a first vessel (11) with respect to a second vessel (11) at each time stamp as one record, a correlation matrix of the risk evaluation values;
determining (S11) a number of eigenvalues having a value of 1 or more based on a Guttman criterion as a number of factors used in performing factor analysis;
calculating (S12) a first factor loading of each of the plurality of risk evaluation values by performing the factor analysis on the correlation matrix using the number of factors;
determining (S13) whether a risk evaluation value for which the first factor loading is less than zero exists;
excluding (S14), from the plurality of risk evaluation values, the risk evaluation value for which the calculated first factor loading is less than zero (0) when determining that the risk evaluation value for which the first factor loading is less than zero exists; and
performing the determining (S11) and the calculating (S12) again, when the risk evaluation value for which the calculated first factor loading is less than zero is excluded, the factor analysis on remaining risk evaluation values obtained by excluding the risk evaluation value for which the first factor loading is less than zero from the plurality of risk evaluation values; and
calculating (S15), when determining that the risk evaluation value for which the first factor loading is less than zero does not exist anymore, a weight for each of first factor loadings of the remaining risk evaluation values with respect to a total of the first factor loadings of the remaining risk evaluation values, multiplying each of the remaining risk evaluation values by the corresponding weight and totaling the weighted remaining risk evaluation values to calculate a comprehensive risk evaluation value,
wherein the comprehensive risk evaluation value indicates a degree of probability that the first vessel and the second vessel collide with each other when a predetermined time elapses in a case where the first vessel and the second vessel keep respective routes and respective speeds in a navigation area, and a warning is output when the comprehensive risk evaluation value is equal to or higher than a threshold.

4. An evaluation device (20) comprising:
a storage unit (30) configured to store calculation result information (32) including a plurality of risk evaluation values of each technique (A - Z) for a first vessel (11) with respect to a second vessel (11) at each time stamp as one record; and
a calculation unit (43) configured to:
calculate, from the calculation result information (32) in the storage unit (30), a correlation matrix of the risk evaluation values;
determine (S11) a number of eigenvalues having a value of 1 or more based on a Guttman criterion as a number of factors used in performing factor analysis;
calculate (S12) a first factor loading of each of the plurality of risk evaluation values by performing the factor analysis on the correlation matrix using the number of factors;
determine (S13) whether a risk evaluation value for which the first factor loading is less than zero exists;
exclude (S14), from the plurality of risk evaluation values, the risk evaluation value for which the calculated first factor loading is less than zero when determining that the risk evaluation value for which the first factor loading is less than zero exists; and
perform the determining (S11) and the calculating (S12) again, when the risk evaluation value for which the calculated first factor loading is less than zero is excluded, the factor analysis on the plurality of risk evaluation values obtained by excluding the risk evaluation value for which the first factor loading is less than zero from the plurality of risk evaluation values; and
calculate (S15), when determining that the risk evaluation value for which the first factor loading is less than zero does not exist anymore, a weight for each of first factor loadings of the remaining risk evaluation values with respect to a total of the first factor loadings of the remaining risk evaluation values, multiplying each of the remaining risk evaluation values by the corresponding weight and totaling the weighted remaining risk evaluation values to calculate a comprehensive risk evaluation value,
wherein the comprehensive risk evaluation value indicates a degree of probability that the first vessel and the second vessel collide with each other when a predetermined time elapses in a case where the first vessel and the second vessel keep respective routes and respective speeds in a navigation area, and a warning is output when the comprehensive risk evaluation value is equal to or higher than a threshold.

## Patentansprüche

1. Auswertungsprogramm, das einen Computer veranlasst, eine Verarbeitung durchzuführen, umfassend:
Berechnen, aus einer Berechnungsergebnisinformation (32), die eine Vielzahl von Risikobewertungskennwerten jeder Technik (A - Z) für ein erstes Schiff (11) in Bezug auf ein zweites Schiff (11) an jedem Zeitstempel jeweils als ein Datensatz einschließt, einer Korrelationsmatrix der Risikobewertungskennwerte;
Bestimmen (S11) einer Anzahl von Eigenwerten, die einen Wert von 1 oder mehr aufweisen, basierend auf einem Guttman-Kriterium als Anzahl von Faktoren, die bei der Durchführung der Faktorenanalyse verwendet werden;
Berechnen (S12) einer ersten Faktorladung für jeden der Vielzahl von Risikobewertungskennwerten durch Durchführen der Faktorenanalyse an der Korrelationsmatrix unter Verwendung der Anzahl von Faktoren;
Bestimmen (S13), ob ein Risikobewertungskennwert existiert, für den die erste Faktorladung kleiner als null ist;
Ausschließen (S14), aus der Vielzahl von Risikobewertungskennwerten, den Risikobewertungskennwert, für den die berechnete erste Faktorladung kleiner als null ist, wenn bestimmt wird, dass der Risikobewertungskennwert, für den die erste Faktorladung kleiner als null ist, existiert; und
erneutes Durchführen des Bestimmens (S11) und des Berechnens (S12), wenn der Risikobewertungskennwert, für den die berechnete erste Faktorladung kleiner als null ist, ausgeschlossen ist, an verbleibenden Risikobewertungskennwerten, die durch Ausschließen des Risikobewertungskennwerts, für den die erste Faktorladung kleiner als null ist, aus der Vielzahl von Risikobewertungskennwerten erhalten werden; und
Berechnen (S15), wenn bestimmt wird, dass der Risikobewertungskennwert, für den die erste Faktorladung kleiner als null ist, nicht mehr existiert, eines Gewichts für jede der ersten Faktorladungen der verbleibenden Risikobewertungskennwerte in Bezug auf eine Summe der ersten Faktorladungen der verbleibenden Risikobewertungskennwerte, Multiplizieren jedes der verbleibenden Risikobewertungskennwerte mit dem entsprechenden Gewicht und Aufsummieren der gewichteten verbleibenden Risikobewertungskennwerte, um einen Gesamtrisikobewertungskennwert zu berechnen,
wobei der Gesamtrisikobewertungskennwert einen Grad der Wahrscheinlichkeit angibt, dass das erste Schiff und das zweite Schiff miteinander kollidieren, wenn eine vorbestimmte Zeit verstrichen ist, in einem Fall, in dem das erste Schiff und das zweite Schiff jeweilige Routen und jeweilige Geschwindigkeiten in einem Navigationsgebiet beibehalten, und eine Warnung ausgegeben wird, wenn der Gesamtrisikobewertungskennwert gleich oder größer als ein Schwellenwert ist.

2. Auswertungsprogramm entsprechend einem der Ansprüche 1, wobei die Faktorenanalyse eine Faktoranalyse ist, die eine schiefwinklige Rotation einschließt.

3. Auswertungsverfahren, das von einem Computer durchgeführt wird, umfassend:
Berechnen, aus einer Berechnungsergebnisinformation (32), die eine Vielzahl von Risikobewertungskennwerten jeder Technik (A - Z) für ein erstes Schiff (11) in Bezug auf ein zweites Schiff (11) an jedem Zeitstempel jeweils als ein Datensatz einschließt, einer Korrelationsmatrix der Risikobewertungskennwerte;
Bestimmen (S11) einer Anzahl von Eigenwerten, die einen Wert von 1 oder mehr aufweisen, basierend auf einem Guttman-Kriterium als Anzahl von Faktoren, die bei der Durchführung der Faktorenanalyse verwendet werden;
Berechnen (S12) einer ersten Faktorladung für jeden der Vielzahl von Risikobewertungskennwerten durch Durchführen der Faktorenanalyse an der Korrelationsmatrix unter Verwendung der Anzahl von Faktoren;
Bestimmen (S13), ob ein Risikobewertungskennwert existiert, für den die erste Faktorladung kleiner als null ist;
Ausschließen (S14), aus der Vielzahl von Risikobewertungskennwerten, den Risikobewertungskennwert, für den die berechnete erste Faktorladung kleiner als null (0) ist, wenn bestimmt wird, dass der Risikobewertungskennwert, für den die erste Faktorladung kleiner als null ist, existiert; und
erneutes Durchführen des Bestimmens (S11) und des Berechnens (S12), wenn der Risikobewertungskennwert, für den die berechnete erste Faktorladung kleiner als null ist, ausgeschlossen ist, der Faktorenanalyse an verbleibenden Risikobewertungskennwerten, die durch Ausschließen des Risikobewertungskennwerts, für den die erste Faktorladung kleiner als null ist, aus der Vielzahl von Risikobewertungskennwerten erhalten werden; und
Berechnen (S15), wenn bestimmt wird, dass der Risikobewertungskennwert, für den die erste Faktorladung kleiner als null ist, nicht mehr existiert, eines Gewichts für jede der ersten Faktorladungen der verbleibenden Risikobewertungskennwerte in Bezug auf eine Summe der ersten Faktorladungen der verbleibenden Risikobewertungskennwerte, Multiplizieren jedes der verbleibenden Risikobewertungskennwerte mit dem entsprechenden Gewicht und Aufsummieren der gewichteten verbleibenden Risikobewertungskennwerte, um einen Gesamtrisikobewertungskennwert zu berechnen,
wobei der Gesamtrisikobewertungskennwert einen Grad der Wahrscheinlichkeit angibt, dass das erste Schiff und das zweite Schiff miteinander kollidieren, wenn eine vorbestimmte Zeit verstrichen ist, in einem Fall, in dem das erste Schiff und das zweite Schiff jeweilige Routen und jeweilige Geschwindigkeiten in einem Navigationsgebiet beibehalten, und eine Warnung ausgegeben wird, wenn der Gesamtrisikobewertungskennwert gleich oder größer als ein Schwellenwert ist.

4. Auswertungsvorrichtung (20), umfassend:
eine Speichereinheit (30), die ausgebildet ist, eine Berechnungsergebnisinformation (32) zu speichern, die eine Vielzahl von Risikobewertungskennwerten jeder Technik (A - Z) für ein erstes Schiff (11) in Bezug auf ein zweites Schiff (11) an jedem Zeitstempel jeweils als ein Datensatz einschließt; und eine Berechnungseinheit (43), die ausgebildet ist:
aus der Berechnungsergebnisinformation (32) in der Speichereinheit (30) eine Korrelationsmatrix der Risikobewertungskennwerte zu berechnen;
eine Anzahl von Eigenwerten, die einen Wert von 1 oder mehr aufweisen, basierend auf einem Guttman-Kriterium als Anzahl von Faktoren, die bei der Durchführung der Faktorenanalyse verwendet werden, zu bestimmen (S11);
eine erste Faktorladung für jeden der Vielzahl von Risikobewertungskennwerten durch Durchführen der Faktorenanalyse an der Korrelationsmatrix unter Verwendung der Anzahl von Faktoren zu berechnen (S12);
zu bestimmen (S13), ob ein Risikobewertungskennwert existiert, für den die erste Faktorladung kleiner als null ist;
aus der Vielzahl von Risikobewertungskennwerten den Risikobewertungskennwert, für den die berechnete erste Faktorladung kleiner als null ist, auszuschließen (S14), wenn bestimmt wird, dass der Risikobewertungskennwert, für den die erste Faktorladung kleiner als null ist, existiert; und
wenn der Risikobewertungskennwert, für den die berechnete erste Faktorladung kleiner als null ist, ausgeschlossen ist, das Bestimmen (S11) und das Berechnen (S12) der Faktorenanalyse an der Vielzahl von Risikobewertungskennwerten erneut durchzuführen, die durch Ausschließen des Risikobewertungskennwerts, für den die erste Faktorladung kleiner als null ist, aus der Vielzahl von Risikobewertungskennwerten erhalten werden; und
wenn bestimmt wird, dass der Risikobewertungskennwert, für den die erste Faktorladung kleiner als null ist, nicht mehr existiert, ein Gewicht für jede der ersten Faktorladungen der verbleibenden Risikobewertungskennwerte in Bezug auf eine Summe der ersten Faktorladungen der verbleibenden Risikobewertungskennwerte zu berechnen (S15), jeden der verbleibenden Risikobewertungskennwerte mit dem entsprechenden Gewicht zu multiplizieren und die gewichteten verbleibenden Risikobewertungskennwerte aufzusummieren, um einen Gesamtrisikobewertungskennwert zu berechnen,
wobei der Gesamtrisikobewertungskennwert einen Grad der Wahrscheinlichkeit angibt, dass das erste Schiff und das zweite Schiff miteinander kollidieren, wenn eine vorbestimmte Zeit verstrichen ist, in einem Fall, in dem das erste Schiff und das zweite Schiff jeweilige Routen und jeweilige Geschwindigkeiten in einem Navigationsgebiet beibehalten, und eine Warnung ausgegeben wird, wenn der Gesamtrisikobewertungskennwert gleich oder größer als ein Schwellenwert ist.

## Revendications

1. Programme d'évaluation amenant un ordinateur à mettre en œuvre un traitement comprenant :
le calcul, à partir d'informations de résultat de calcul (32) incluant une pluralité de valeurs d'évaluation de risque de chaque technique (A - Z) pour un premier navire (11) par rapport à un second navire (11) à chaque horodatage, sous la forme d'un enregistrement, d'une matrice de corrélation des valeurs d'évaluation de risque ;
la détermination (S11) d'un nombre de valeurs propres présentant une valeur de 1 ou plus sur la base d'un critère de Guttman en tant que nombre de facteurs utilisés pour mettre en œuvre une analyse factorielle ;
le calcul (S12) d'une première charge factorielle de chacune de la pluralité de valeurs d'évaluation de risque en mettant en œuvre l'analyse factorielle sur la matrice de corrélation en utilisant le nombre de facteurs ;
le fait de déterminer (S13) s'il existe une valeur d'évaluation de risque pour laquelle la première charge factorielle est inférieure à zéro ;
l'exclusion (S14), de la pluralité de valeurs d'évaluation de risque, de la valeur d'évaluation de risque pour laquelle la première charge factorielle calculée est inférieure à zéro lorsqu'il est déterminé que la valeur d'évaluation de risque pour laquelle la première charge factorielle est inférieure à zéro existe ; et
la mise en œuvre de nouveau de la détermination (S11) et du calcul (S12), lorsque la valeur d'évaluation de risque pour laquelle la première charge factorielle calculée est inférieure à zéro est exclue, sur des valeurs d'évaluation de risque restantes obtenues en excluant, de la pluralité de valeurs d'évaluation de risque, la valeur d'évaluation de risque pour laquelle la première charge factorielle est inférieure à zéro ; et
le calcul (S15), lorsqu'il est déterminé que la valeur d'évaluation de risque pour laquelle la première charge factorielle est inférieure à zéro n'existe plus, d'un poids pour chacune de premières charges factorielles des valeurs d'évaluation de risque restantes par rapport à un total des premières charges factorielles des valeurs d'évaluation de risque restantes, la multiplication de chacune des valeurs d'évaluation de risque restantes par le poids correspondant et la somme des valeurs d'évaluation de risque restantes pondérées pour calculer une valeur d'évaluation de risque intégrée,
dans lequel la valeur d'évaluation de risque intégrée indique un degré de probabilité que le premier navire et le second navire entrent en collision l'un avec l'autre lorsqu'un temps prédéterminé s'écoule dans un cas où le premier navire et le second navire maintiennent leurs itinéraires respectifs et leurs vitesses respectives dans une zone de navigation, et un avertissement est délivré en sortie lorsque la valeur d'évaluation de risque intégrée est supérieure ou égale à un seuil.

2. Programme d'évaluation selon l'une quelconque des revendications 1, dans lequel l'analyse factorielle est une analyse factorielle incluant une rotation oblique.

3. Procédé d'évaluation mis en œuvre par un ordinateur, comprenant :
le calcul, à partir d'informations de résultat de calcul (32) incluant une pluralité de valeurs d'évaluation de risque de chaque technique (A - Z) pour un premier navire (11) par rapport à un second navire (11) à chaque horodatage, sous la forme d'un enregistrement, d'une matrice de corrélation des valeurs d'évaluation de risque ;
la détermination (S11) d'un nombre de valeurs propres présentant une valeur de 1 ou plus sur la base d'un critère de Guttman en tant que nombre de facteurs utilisés pour mettre en œuvre une analyse factorielle ;
le calcul (S12) d'une première charge factorielle de chacune de la pluralité de valeurs d'évaluation de risque en mettant en œuvre l'analyse factorielle sur la matrice de corrélation en utilisant le nombre de facteurs ;
le fait de déterminer (S13) s'il existe une valeur d'évaluation de risque pour laquelle la première charge factorielle est inférieure à zéro ;
l'exclusion (S14), de la pluralité de valeurs d'évaluation du risque,
de la valeur d'évaluation de risque pour laquelle la première charge factorielle calculée est inférieure à zéro (0) lorsqu'il est déterminé que la valeur d'évaluation de risque pour laquelle la première charge factorielle est inférieure à zéro existe ; et
la mise en œuvre de nouveau de la détermination (S11) et du calcul (S12), lorsque la valeur d'évaluation de risque pour laquelle la première charge factorielle calculée est inférieure à zéro est exclue, de l'analyse factorielle sur des valeurs d'évaluation de risque restantes obtenues en excluant, de la pluralité de valeurs d'évaluation de risque, la valeur d'évaluation de risque pour laquelle la première charge factorielle est inférieure à zéro ; et
le calcul (S15), lorsqu'il est déterminé que la valeur d'évaluation de risque pour laquelle la première charge factorielle est inférieure à zéro n'existe plus, d'un poids pour chacune des premières charges factorielles des valeurs d'évaluation de risque restantes par rapport à un total des premières charges factorielles des valeurs d'évaluation de risque restantes, la multiplication de chacune des valeurs d'évaluation de risque restantes par le poids correspondant et la somme des valeurs d'évaluation de risque restantes pondérées pour calculer une valeur d'évaluation de risque intégrée,
dans lequel la valeur d'évaluation de risque intégrée indique un degré de probabilité que le premier navire et le second navire entrent en collision l'un avec l'autre lorsqu'un temps prédéterminé s'écoule dans un cas où le premier navire et le deuxième navire maintiennent leurs itinéraires respectifs et leurs vitesses respectives dans une zone de navigation, et un avertissement est délivré en sortie lorsque la valeur d'évaluation de risque intégrée est supérieure ou égale à un seuil.

4. Dispositif d'évaluation (20) comprenant :
une unité de stockage (30) configurée pour stocker des informations de résultat de calcul (32) incluant une pluralité de valeurs d'évaluation de risque de chaque technique (A - Z) pour un premier navire (11) par rapport à un second navire (11) à chaque horodatage, sous la forme d'un enregistrement ; et
une unité de calcul (43) configurée pour :
calculer, à partir des informations de résultat de calcul (32) dans l'unité de stockage (30), une matrice de corrélation des valeurs d'évaluation de risque ;
déterminer (S11) un nombre de valeurs propres présentant une valeur de 1 ou plus sur la base d'un critère de Guttman en tant que nombre de facteurs utilisés pour mettre en œuvre une analyse factorielle ;
calculer (S12) une première charge factorielle de chacune de la pluralité de valeurs d'évaluation de risque en mettant en œuvre l'analyse factorielle sur la matrice de corrélation en utilisant le nombre de facteurs ;
déterminer (S13) s'il existe une valeur d'évaluation de risque pour laquelle la première charge factorielle est inférieure à zéro ;
exclure (S14), de la pluralité de valeurs d'évaluation de risque,
la valeur d'évaluation de risque pour laquelle la première charge factorielle calculée est inférieure à zéro lorsqu'il est déterminé que la valeur d'évaluation de risque pour laquelle la première charge factorielle est inférieure à zéro existe ; et
mettre en œuvre de nouveau la détermination (S11) et le calcul (S12), lorsque la valeur d'évaluation de risque pour laquelle la première charge factorielle calculée est inférieure à zéro est exclue, l'analyse factorielle sur la pluralité de valeurs d'évaluation de risque obtenues en excluant, de la pluralité de valeurs d'évaluation de risque, la valeur d'évaluation de risque pour laquelle la première charge factorielle est inférieure à zéro ; et
calculer (S15), lorsqu'il est déterminé que la valeur d'évaluation de risque pour laquelle la première charge factorielle est inférieure à zéro n'existe plus, un poids pour chacune de premières charges factorielles des valeurs d'évaluation de risque restantes par rapport à un total des premières charges factorielles des valeurs d'évaluation de risque restantes, multiplier chacune des valeurs d'évaluation de risque restantes par le poids correspondant et additionner les valeurs d'évaluation de risque restantes pondérées pour calculer une valeur d'évaluation de risque intégrée,
dans lequel la valeur d'évaluation de risque intégrée indique un degré de probabilité que le premier navire et le second navire entrent en collision l'un avec l'autre lorsqu'un temps prédéterminé s'écoule dans un cas où le premier navire et le second navire maintiennent leurs itinéraires respectifs et leurs vitesses respectives dans une zone de navigation, et un avertissement est délivré en sortie lorsque la valeur d'évaluation de risque intégrée est supérieure ou égale à un seuil.
